# EUROPÄISCHE PATENTSCHRIFT

(11) **EP 2 296 951 B1**
(45) Veröffentlichungstag und Bekanntmachung des Hinweises auf die Patenterteilung: **27.02.2013**
(21) Anmeldenummer: 09772237.5
(22) Anmeldetag: 15.05.2009
(51) Int. Cl.: B60W 30/06, B60W 50/08, B62D 15/02

(54) **VORRICHTUNG UND VERFAHREN ZUR FREIGABE EINER AUTOMATISCHEN FÜHRUNG EINES FAHRZEUGS**
DEVICE AND METHOD FOR APPROVING AUTOMATIC GUIDANCE OF A VEHICLE
DISPOSITIF ET PROCÉDÉ DE LIBÉRATION D'UN GUIDAGE AUTOMATIQUE D'UN VÉHICULE

(30) Priorität: 03.07.2008 DE 102008040149
(43) Veröffentlichungstag der Anmeldung: 23.03.2011
(73) Patentinhaber: Robert Bosch GmbH, 70442 Stuttgart (DE)
(72) Erfinder: KOEHLER, Markus, 71636 Ludwigsburg (DE); SCHERL, Michael, 74321 Bietigheim (DE); HAUG, Matthias, 70469 Stuttgart (DE); ZIMMERMANN, Uwe, 71686 Remseck (DE)
(86) Internationale Anmeldenummer: PCT/EP2009/055893
(87) Internationale Veröffentlichungsnummer: WO 2010/000537

(56) Entgegenhaltungen:
- DE-A1- 10 039 795
- DE-A1- 19 734 307
- DE-A1-102004 051 963

## Beschreibung

### Stand der Technik

Die Erfindung geht aus von einer Vorrichtung oder einem Verfahren nach Gattung der unabhängigen Ansprüche. Aus der DE 100 39 795 A1 ist bereits ein Verfahren zur Warnung eines Fahrers eines Fahrzeugs bekannt, bei dem eine Ausgabe von Warnungen in Abhängigkeit von einer Aufmerksamkeit des Fahrers erfolgt. Hierbei wird der Blickrichtung des Fahrers eine hohe Aufmerksamkeit und übrigen Richtungen eine niedrige Aufmerksamkeit zugewiesen.

Aus der DE 38 13 083 A1 ist eine automatische Einparkeinrichtung für Fahrzeuge bekannt, die Bewegungssensoren zur Messung einer Bewegungsstrecke des Wagens, Hindernis-Sensoren zur Ermittlung einer Position von Hindernissen um den Wagen herum und einen Mikrocomputer aufweist, der ein Ausgangssignal erzeugt, um einen Steuerungsmechanismus, eine Gangschaltung und ein Bremssystem des Kraftfahrzeugs zu steuern, um das Fahrzeug automatisch einzuparken.

### Offenbarung der Erfindung

### Vorteile der Erfindung

Die erfindungsgemäße Vorrichtung zur Freigabe einer automatischen Führung eines Fahrzeugs mit den Merkmalen des unabhängigen Anspruchs hat demgegenüber den Vorteil, dass eine automatische Führung des Fahrzeugs nur dann freigegeben wird, wenn sichergestellt wird, dass der Fahrer mit seinem Gesichtsfeld zumindest den Fahrweg des Fahrzeugs in derjenigen Richtung erfassen kann, in die das Fahrzeug automatisch gesteuert wird. Unter dem Gesichtsfeld soll dabei der gesamte Raumbereich bezeichnet werden, der ohne eine Augenbewegung von einem Betrachter erfasst werden kann.

Somit wird sichergestellt, dass die optischen Sinneskanäle des Fahrers zusätzlich zu den Sensoren des Fahrzeugs einen Fahrweg erfassen und damit sichergestellt ist, dass der Fahrer, der letztendlich für die Fahrhandlungen des Fahrzeugs verantwortlich ist, die Fahrt des Fahrzeugs auch tatsächlich überwacht. Stellt der Fahrer ein Hindernis in dem Fahrweg des Fahrzeugs fest, so wird er dieses Hindernis wahrnehmen, da das Fahrzeug eine automatische Führung des Fahrzeugs nur durchführt, wenn der Fahrweg in dem Blickfeld des Fahrers liegt. Nimmt der Fahrer das Hindernis jedoch wahr, so kann er selbst reagieren und eine automatische Führung des Fahrzeugs abbrechen, beispielsweise durch einen von ihm eingeleiteten Bremsvorgang.

Erfindungsgemäß wird somit vermieden, dass der Fahrer durch eine automatische Fahrunterstützung dazu verleitet wird, den Fahrweg des Fahrzeugs bei einer automatischen Fahrt nicht mehr zu betrachten. Insbesondere für den Fall, dass sich Hindernisse in den für das automatische Fahren vorgesehenen Fahrweg bewegen oder eine Hinderniserfassung unzutreffend ist, beispielsweise aufgrund einer schlechten Detektierbarkeit eines Hindernisses, können somit mögliche Schäden an dem Fahrzeug bzw. an dem Hindernis mittels der zusätzlichen Absicherung durch die Blickerfassung durch den Fahrer verhindert werden. In entsprechender Weise ist es ebenfalls möglich, Redundanzanforderungen an Hinderniserfassungssysteme zur Überwachung der Fahrzeugumgebung und damit die Kosten für derartige Hinderniserfassungssysteme zu reduzieren, da die Mitwirkung des Fahrers als zusätzliche Überprüfungsinstanz sichergestellt werden kann. Denn nicht nur das System zur automatischen Führung des Fahrzeugs kann bei einem erfassten Hindernis das Fahrzeug verzögern, sondern auch der Fahrer selber kann infolge der sichergestellten Überwachung des Fahrwegs des Fahrzeugs durch ihn bei Bedarf selber eine Verzögerung vornehmen. Durch die zusätzliche Überwachung durch den Fahrer können zudem Fehlertoleranzen geringer gewählt werden, so dass ein Auftreten von automatischen Abbrüchen des automatischen Fahrens, die aufgrund von hohen Sichertoleranzen auftreten könnten, verringert werden kann.

In entsprechender Weise ist ein erfindungsgemäßes Verfahren vorteilhaft, bei dem eine automatische Führung nur dann freigegeben wird, wenn die Fahrtrichtung des Fahrzeugs bei der automatischen Führung in einem Gesichtsfeld des Fahrers liegt.

Durch die in den abhängigen Ansprüchen aufgeführten Maßnahmen sind vorteilhafte Weiterbildungen und Verbesserungen der in dem unabhängigen Anspruch angegebenen Vorrichtung und des in dem unabhängigen Anspruch angegebenen Verfahren möglich. So kann eine Erfassung des Gesichtsfeldes auf einfache Weise durch eine Auswertung der Blickrichtung und/oder der Kopfposition des Fahrers erfolgen.

Ferner ist es erfindungsgemäß vorteilhaft, dass eine entsprechende Freigabe eines automatischen Fahrens für den Fall verwendet wird, dass eine automatische Führung des Fahrzeugs rückwärts in eine Parklücke erfolgt. Insbesondere bei einer Einfahrt in eine Parklücke können durch die zusätzliche Überwachung durch den Fahrer verschiedene Fehlerquellen ausgeschlossen werden. So kann beispielsweise das Fahrzeug durch den Fahrer gebremst werden, sollte eine Parklückenvermessung ungenau oder fehlerhaft durchgeführt worden sein. Ferner ist es auch möglich, dass der Fahrer auf sich bewegende Parklückenbegrenzungen oder sich in die Parklücke bewegende Hindernisse reagieren kann. Zudem kann vorteilhaft sichergestellt werden, dass ein Einparkvorgang möglichst an einem Stück und ohne unnötiges Abbrechen durchgeführt werden kann. Dennoch können insbesondere kleinere oder schlecht detektierbare Hindernisse, beispielsweise ein kleines Haustier, durch einen Fahrer sicher erfasst und das Fahrzeug entsprechend angehalten werden.

Ferner ist es vorteilhaft, eine Kameraeinrichtung zur Ermittlung einer Blickrichtung oder einer Kopfposition des Fahrzeugführers vorzusehen, da entsprechende Erfassungseinrichtungen gegebenenfalls bereits für andere Zwecke zur Fahrerüberwachung im Fahrzeug vorhanden sind. Zudem ist auf einfache Weise eine entsprechende Blickrichtungserkennung durch eine entsprechende Kameraeinrichtung möglich. Die Kamera ist dabei vorteilhaft an einem Fahrzeugdach oder auch an einer Instrumententafel des Fahrzeugs angeordnet. Durch diese Positionierung kann der Fahrer beobachtet werden, ohne dass er durch die Kameraeinrichtung in seinem Blick behindert wird.

Ferner ist es vorteilhaft, dass für den Fall, dass der Fahrer nicht mehr in die entsprechende Fahrtrichtung des Fahrzeugs schaut, eine automatische Führung abgebrochen wird. Somit kann sichergestellt werden, dass das Fahrzeug nur solange in eine Richtung automatisch fortbewegt wird, wie eine Überwachung durch einen Blick des Fahrers in die entsprechende Fahrtrichtung sichergestellt wird. Hierbei ist es zusätzlich vorteilhaft, für den Fall, dass der Fahrer eine entsprechende Fahrtrichtung nicht mehr in seinem Blickfeld hat, eine Verzögerung des Fahrzeugs durchzuführen, ggf. bis zu einem Stillstand. Hierdurch kann eine durch einen Fahrer nicht mehr kontrollierte Bewegung des Fahrzeugs bei einer automatischen Führung des Fahrzeugs verhindert werden. Vor einer automatische Verzögerung wird der Fahrer vorteilhaft gewarnt, um den Fahrer auf einen durchgeführten oder drohenden Abbruch der automatischen Führung hinzuweisen. So kann der Fahrer entweder sein Gesichtsfeld wieder zu der Fahrtrichtung des Fahrzeugs wenden, um die automatische Führung des Fahrzeugs fortzusetzen, oder die Steuerung des Fahrzeugs wieder selber übernehmen.

### Kurze Beschreibung der Zeichnungen

Ausführungsbeispiele der Erfindung sind in den Zeichnungen dargestellt und in der nachfolgenden Beschreibung näher erläutert. Es zeigen
- Fig. 1: eine schematische Aufsicht auf ein Fahrzeug mit einer erfindungsgemäßen Vorrichtung zur Freigabe einer automatischen Führung eines Fahrzeugs,
- Fig. 2: eine Darstellung eines Fahrzeugs mit einer erfindungsgemäßen Vorrichtung zur Freigabe einer automatischen Führung des Fahrzeugs in einer Seitenansicht,
- Fig. 3: ein entsprechendes Fahrzeug in einer Aufsicht,
- Fig. 4: ein Ausführungsbeispiel für die Durchführung eines erfindungsgemäßen Verfahrens.

### Ausführungsformen der Erfindung

Die erfindungsgemäße Vorrichtung zur Freigabe einer automatischen Führung eines Fahrzeugs kann für beliebige Fahrzeuge und für beliebige Fahrmanöver eingesetzt werden. Eine automatische Führung eines Fahrzeugs ist jedoch insbesondere in denjenigen Fällen vorteilhaft, in denen eine rechnerische Steuerung des Fahrzeugs mitunter einer manuellen Steuerung des Fahrzeugs durch einen durchschnittlichen Fahrer überlegen ist. Dies ist insbesondere bei Einparkverfahren der Fall, insbesondere bei Einparkverfahren parallel zu einer Fahrtrichtung des Fahrzeugs, bei denen ein Fahrer eine Parklücke mit seinem Augenmaß meist nur recht schlecht abschätzen kann und für ein Lenken des Fahrzeugs mit möglichst wenig Zügen in eine gewünschte Parklücke mitunter nur ein recht geringer Toleranzbereich bei der Führung des Fahrzeugs besteht. Zudem kommen die bei einem Einparkverfahren üblicher Weise relativ niedrigen Fahrzeuggeschwindigkeiten einer automatischen Steuerung sowie einer Erfassung von Hindernissen in einer Fahrzeugumgebung entgegen. Daher wird die vorliegende Erfindung im Folgenden am Beispiel eines Einparkverfahrens eines Kraftfahrzeugs erläutert.

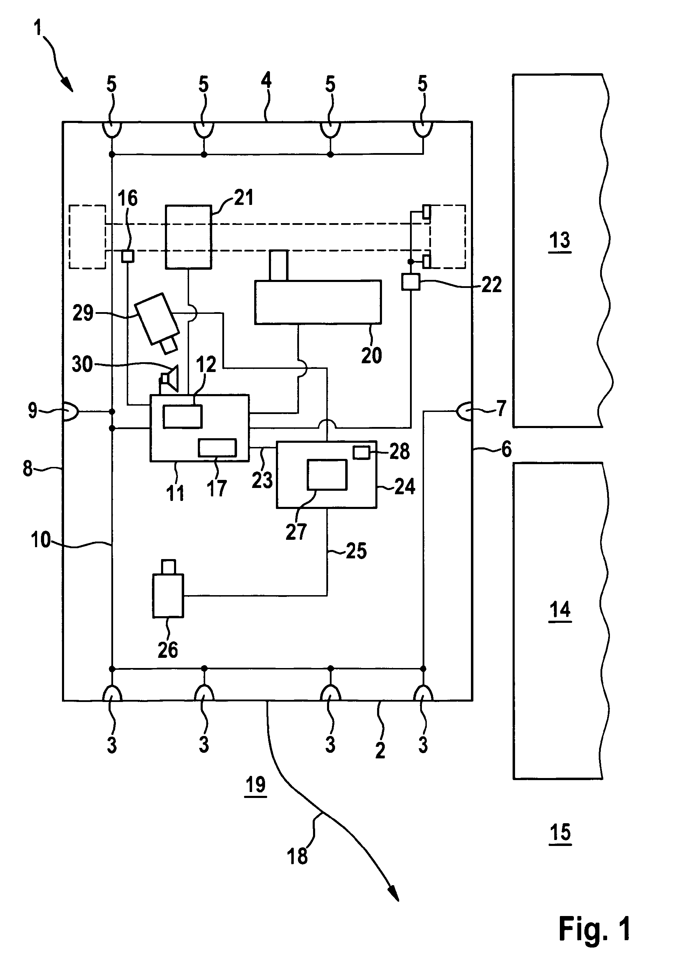

In der Fig. 1 ist ein Kraftfahrzeug 1 in einer schematischen Aufsicht dargestellt. An einer Rückseite 2 des Fahrzeugs 1 sind Abstandssensoren 3 angeordnet. Entsprechend sind auch an der Frontseite 4 des Fahrzeugs Abstandssensoren 5 angeordnet. An einer rechten Fahrzeugseite 6 ist ebenfalls ein Abstandssensor 7 angeordnet. Entsprechend ist an einer linken Fahrzeugseite 8 auch ein Abstandssensor 9 angeordnet.

Die Abstandssensoren 3, 5, 7, 9 sind beispielsweise als Ultraschallsensoren ausgeführt. Sie messen die Abstände zu Hindernissen in einer Umgebung des Fahrzeugs. Über eine Datenverbindung 10 werden die Messergebnisse an eine Auswerteeinheit 11 weitergeleitet. Die Auswerteeinheit 11 verfügt über eine Recheneinheit 12 und erstellt aus den gemessenen Abstandsdaten zu Hindernissen 13, 14 in einer Umgebung des Fahrzeugs eine Umgebungskarte. Um eine Parklücke 15 zu vermessen, wird das Fahrzeug entlang der Parklücke 15 und den Hindernissen 13, 14 geführt. Eine zurückgelegte Wegstrecke wird dabei über einen Wegstreckenmesser 16 erfasst. Die gemessenen Abstandswerte werden von der Recheneinheit 12 in Beziehung zu den insbesondere von dem Abstandssensor 7 an der rechten Fahrzeugseite 6 gemessenen Abstandswerten gesetzt. Wird beispielsweise auf der rechten Fahrzeugseite 6 eine Parklücke festgestellt, werden vorteilhaft sowohl die Länge, als auch die Breite der Parklücke mit in einer Speichereinrichtung 17 der Auswerteeinheit 11 abgelegten Fahrzeugdaten verglichen. Ist die Parklücke groß genug, so berechnet die Recheneinheit 12 eine Fahrstrecke, die das Fahrzeug von einer aktuellen Position in die Parklücke 15 führt. Eine entsprechende Trajektorie 18, entlang der das Fahrzeug geführt werden soll, ist in der Fig. 1 dargestellt.

In einer ersten Ausführungsform werden sowohl eine Antriebseinheit 20, eine Lenkeinheit 21 und eine Bremseinrichtung 22 von der Auswerteeinheit 11 angesteuert. Durch Lenken, Beschleunigen und Bremsen des Fahrzeugs 1 kann das Fahrzeug nun entlang der zuvor berechneten Trajektorie 18 in die Parklücke 15 geführt werden.

Um in erfindungsgemäßer Weise sicherzustellen, dass ein Fahrer auch bei einer automatischen Führung des Fahrzeugs einen Fahrraum 19 an der Rückseite 2 des Fahrzeugs überwacht, ist die Auswerteeinheit 11 über eine Schnittstelle 23 mit einer Vorrichtung 24 zur Freigabe einer automatischen Führung des Fahrzeugs ausgestattet. Über die Schnittstelle 23 wird der Vorrichtung 24 zur Freigabe der automatischen Führung von der Auswerteeinheit 11 eine Fahrtrichtung übertragen, in der das Fahrzeug bei der automatischen Führung gesteuert werden soll. Die Angabe der Fahrtrichtung kann in einer Ausführungsform eine grobe Angabe, beispielsweise vorwärts oder rückwärts, in einer anderen Ausführungsform aber auch eine genauere Richtungsangabe unter Angabe eins geplanten Lenkwinkels oder Lenkwinkelverlaufs umfassen.

An eine Schnittstelle 25 der Vorrichtung 24 zur Freigabe ist eine Kameraeinrichtung 26 angeschlossen, die eine Blickrichtung des Fahrers in Richtung des rückwärtigen Fahrraums 19 erfasst. In einer ersten Ausführungsform ist es hierbei vorgesehen, dass die Kameravorrichtung 26 die Augen des Fahrers erfasst. Solange der Fahrer nach vorne blickt, also in Richtung der Fahrzeugfrontseite 4, kann das Augenpaar des Fahrers von der Kameraeinrichtung 26 nicht erfasst werden. Erst wenn sich der Fahrer herumdreht, wird das Augenpaar des Fahrers erfasst. Die entsprechenden Bilder der Kameraeinrichtung werden von einer Recheneinheit 27 der Vorrichtung zur Freigabe ausgewertet. In einer Ausführungsform kann die Vorrichtung 24 zur Freigabe hierzu eine Speichereinrichtung 28 aufweisen, in der bestimmte optische Gesichtsmerkmale des Fahrers abgelegt sind. In einer weiteren Ausführungsform können hierbei anstatt oder ergänzend zu einem Gesichtsmerkmal der Augenposition auch andere Gesichtsmerkmale für eine Kontrolle der Blickrichtung herangezogen werden. Dies können beispielsweise eine Position eines Ohrs oder eine Position des Mundes des Fahrers sein.

Ferner ist es auch möglich, insbesondere bei einem Fahrzeug mit Kopfstütze, eine Position des Kopfs entsprechend links und/oder rechts von der Kopfstütze zu erfassen, beispielsweise durch eine in die Kopfstütze integrierte kapazitive Sensorik zur Erfassung einer Position des Kopfes.

In einer weiteren Ausführungsform kann alternativ oder ergänzend zu der Erfassung mittels der Kamera 26 in einem Rückraum des Fahrzeugs, die auf den Fahrer gerichtet ist, auch eine Kamera 29 in einem Frontbereich des Fahrzeugs, insbesondere in der Instrumententafel des Fahrzeugs, vorgesehen sein. Die Kamera 29 kann entsprechend eine Kopfausrichtung des Fahrers in Fahrtrichtung oder in einer Wendung nach hinten erfassen, also in Richtung des Fahrbereichs 19.

Entsprechend der erfassten Augenposition, Kopfposition und/oder anderen Gesichtsmerkmalen wird das Gesichtsfeld in einer Ausführungsform lediglich abgeschätzt. Entsprechend ist es möglich, entsprechende Grenzwerte beispielsweise für eine erfasste Augen- oder Kopfposition vorzusehen, ab denen ein Blick des Fahrers nach vorne durch eine Frontscheibe oder ein Blick des Fahrers nach hinten durch eine Rückscheibe des Fahrzeugs festgelegt wird. Eine solche Ermittlung kann für eine Bestimmung des Gesichtsfeldes für eine erfindungsgemäße Anwendung ausreichend sein. Denn da das Gesichtsfeld eines Menschen eine horizontale Ausdehnung von insgesamt ca. 170° aufweist, ist es gegebenenfalls nicht erforderlich, die exakte Blickrichtung des Fahrers durch eine Rückscheibe des Fahrzeugs auf den Fahrraum 19 zu erfassen. Gemäß der vorliegenden Ausführungsform wird lediglich abgeschätzt, ob der Fahrweg, den das Fahrzeug nimmt und der durch eine Rückscheibe des Fahrzeugs voll sichtbar ist, in einem Gesichtsfeld des Fahrers liegt.

Bei einer genaueren, möglichen Erfassung einer Blickrichtung eines Fahrers kann in einer weiteren Ausführungsform beispielsweise auch festgelegt werden, dass der Fahrweg des Fahrzeugs in einem Gesichtsfeld des Fahrers liegen muss, das eine farbliche Erfassung des Bildes über das Auge gewährleistet und das lediglich einen horizontalen Winkel von maximal etwa 50° überstreicht.

Wird von der Vorrichtung 24 zur Freigabe festgestellt, dass der Fahrbereich 19 in dem Gesichtsfeld des Fahrers des Fahrzeugs liegt, so wird eine automatische Steuerung des Fahrzeugs über die Auswerteeinheit 11 freigegeben. In einer weiteren Ausführungsform wird zudem überwacht, ob der Fahrer während der automatischen Führung des Fahrzeugs weiterhin den Fahrweg überwacht, d. h. dass der Fahrer beispielsweise weiterhin zu dem Fahrbereich 19 des Fahrzeugs entlang der Trajektorie 18 umgedreht bleibt und den Fahrweg so weiterhin in seinem Gesichtsfeld hat. Wird zu einem späteren Zeitpunkt festgestellt, dass der Fahrer nun nicht mehr in die Richtung schaut, in der sich das Fahrzeug 1 bewegt, so veranlasst die Vorrichtung 24 zur Freigabe durch die Weitergabe einer entsprechenden Information an die Auswerteeinheit 11, dass das Fahrzeug durch eine Einwirkung auf die Antriebseinheit 20 und/oder auf die Bremseinrichung 22 verzögert wird, ggf. bis zum einem Stillstand. Ggf. kann hierzu von der Auswerteeinheit 11 eine entsprechende Warnung über eine Ausgabeeinheit ausgegeben werden, beispielsweise ein Signalton über einen Lautsprecher 30. In einer Ausführungsform kann es auch vorgesehen sein, dass für den Fall, dass festgestellt wird, dass der Fahrer den Fahrweg für eine automatische Steuerung nicht mehr in seinem Gesichtsfeld hat, zunächst eine akustische Warnung ausgegeben wird. Eine automatische Verzögerung erfolgt nun mit einem Zeitverzug, beispielsweise zwei Sekunden, für den Fall, dass eine Erfassung des Fahrwegs durch das Gesichtsfeld des Fahrers nicht wieder erfasst wird. Somit kann verhindert werden, dass ein kurzes Wegschauen, beispielsweise zur Überwachung anderer Fahrzeuge in der Umgebung des Fahrzeugs, bereits eine automatische Verzögerung des Fahrzeugs auslösen kann.

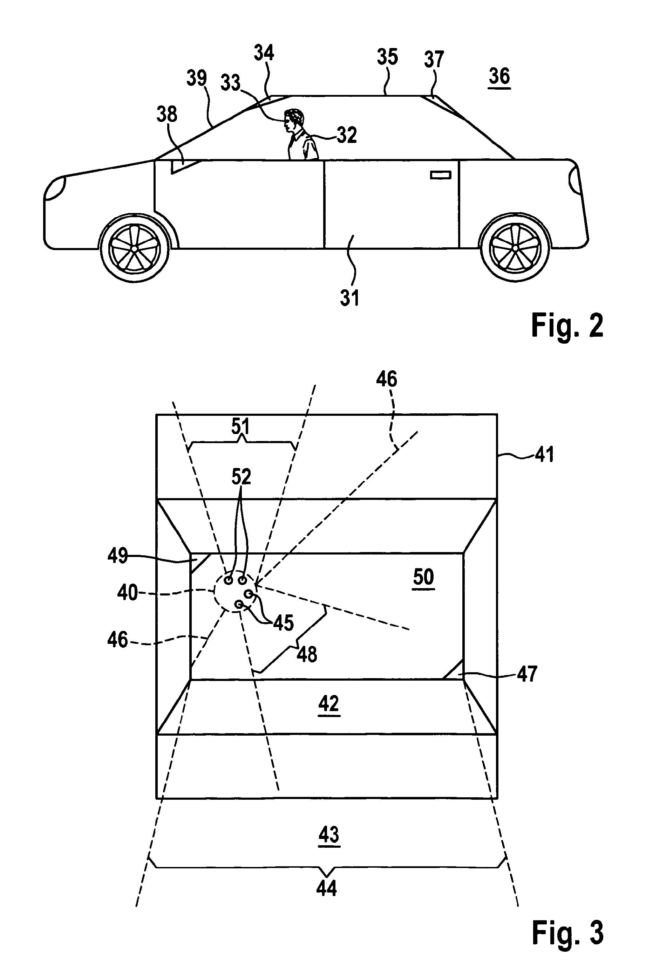

Mögliche Positionierungen für Kameraeinrichtungen sind in der Fig. 2 dargestellt. In einem Kraftfahrzeug 31 ist ein Fahrer 32 dargestellt, dessen Gesicht 33 von einer oder mehreren Kameraeinrichtungen in einem Fahrzeug erfasst werden. Eine erste mögliche Kameraposition 34 ist an einer A-Säule des Fahrzeugs in der Nähe eines Fahrzeugdachs 35 dargestellt. Um eine Blickrichtung des Fahrers in einen rückwärtigen Fahrraum 36 zu erfassen, ist an einer Fahrzeugrückseite alternativ oder ergänzend hierzu eine weitere Kameraeinrichtung 37 angeordnet. In einer weiteren Ausführungsform kann auch an der Instrumententafel eine Kameraeinrichtung vorgesehen sein. In einer Ausführungsform ist die Kameravorrichtung 38 beispielsweise in eine Head-Up-Anzeige integriert und beobachtet den Fahrer über den optischen Weg, in der ein virtuelles Bild in eine Windschutzscheibe 39 des Fahrzeugs eingeblendet wird.

In der Fig. 3 ist eine entsprechende Darstellung der verschiedenen Gesichts- und Blickfelder eines Fahrers 40 in einem Fahrzeug 41 dargestellt. Durch eine Rückscheibe 42 kann der Fahrer einen rückwärtigen Fahrraum 43 beobachten. Der für die Beobachtung des rückwärtigen Fahrraums 43 unbedingt erforderliche Blickwinkelbereich 44 ist durch eine gestrichelte Linie dargestellt. Befinden sich die Augen 45 des Fahrers 40 in der hier gezeigten Position, so ist sein ebenfalls gestrichelt dargestelltes Gesichtsfeld 46 ausreichend dazu, den gesamten Blickwinkelbereich 44 und damit den Fahrraum 43 zu überblicken. Eine entsprechende Beobachtung des Fahrers kann hierbei über eine Kameraeinrichtung 47 erfolgen. In einer ersten Ausführungsform erfolgt eine Freigabe einer automatischen Führung des Fahrzeugs in eine Rückrichtung bereits dann, wenn festgestellt wird, dass das Gesichtsfeld 46 den Winkelbereich 44 überdeckt. In einer weiteren Ausführungsform kann auch vorgesehen sein, dass ein zentraler Gesichtsfeldbereich 48 des Fahrers von beispielsweise horizontal +/- 20° vollständig den Winkelbereich 44 erfassen soll. In einer weiteren Ausführungsform kann zudem für eine Überwachung einer automatischen Fahrt des Fahrzeugs nach vorne eine Kamera 49 an einer vorderen Ecke eines Fahrzeugdachs 50 des Fahrzeugs 41 vorgesehen sein, um einen Blick 51 des Fahrers in eine Frontrichtung des Fahrzeugs für eine automatische Steuerung des Fahrzeugs in eine Fahrtrichtung nach vorne zu überwachen. Entsprechend ist eine Augenposition 52 korrespondierend zu der Blickrichtung 51 dargestellt.

Neben einer vollständigen Führung des Fahrzeugs über Lenkung, Beschleunigung und Bremsung kann über die Vorrichtung 24 zur Freigabe eines automatischen Fahrens auch in entsprechender Weise bei einer anderen Ausführungsform ein teilweise automatisches Fahren des Fahrzeugs freigegeben werden, beispielsweise eine automatische Lenkung des Fahrzeugs, während die Längsführung (also die Beschleunigung und die Bremsung des Fahrzeugs) weiterhin dem Fahrer obliegt. In entsprechender Weise kann somit eine automatische Beschleunigung bzw. eine Bremsung des Fahrzeugs behindert oder unterbunden werden, solange der Fahrer nicht in diejenige Richtung schaut, in die die automatische Lenkung das Fahrzeug führt.

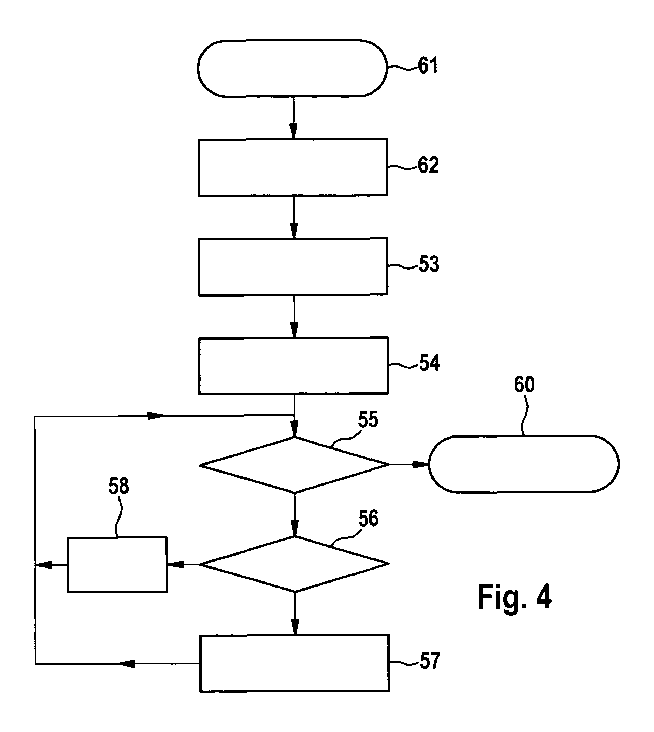

Ein Ausführungsbeispiel für eine Durchführung des erfindungsgemäßen Verfahrens ist in der Fig. 4 dargestellt. Ausgehend von einem Initialisierungsschritt 61 wird eine Erfassung einer Parklücke gestartet. In einem anschließenden Messschritt 62 wird insbesondere durch die seitlich an dem Fahrzeug angeordneten Abstandssensoren 7, 9 eine Fahrzeugumgebung vermessen und potentielle Parklücken werden hinsichtlich ihrer Länge und/oder ihrer Breite vermessen. Ist eine geeignete Parklücke gefunden worden, so wird in einem Berechnungsschritt 53 eine Einparktrajektorie von einer aktuellen Fahrzeugposition in die ermittelte Parklücke berechnet. In einem anschließenden Warn- und Übergabeschritt 54 wird der Fahrer beispielsweise über eine akustische Ausgabe über den Lautsprecher 30 darüber informiert, dass nunmehr eine automatische Führung des Fahrzeugs erfolgt. Ggf. kann der Fahrer während des Warn- und Übergabeschritts 54, beispielsweise durch eine manuelle Bestätigung, das automatische Verfahren starten. Ferner ist es auch möglich, dass ein automatischer Start erfolgt. Anschließend wird zu einem ersten Prüfschritt 55 verzweigt, in dem überprüft wird, ob das Fahrziel, also die Endposition des Fahrzeugs in der Parklücke, erreicht wurde. Ist dies der Fall, so wird zu einem Endschritt 60 verzweigt und das Fahrzeug wird in der Parklücke angehalten.

Falls das Fahrziel noch nicht erreicht wurde, wird stattdessen von dem ersten Prüfschritt 55 zu einem zweiten Prüfschritt 56 verzweigt. In dem zweiten Prüfschritt 56 wird überprüft, ob ein Fahrweg des Fahrzeugs in einem Gesichtsfeld des Fahrers liegt. Dies erfolgt beispielsweise, wie oben erläutert, über wenigstens eine Kameraeinrichtung und die Recheneinheit 27. Hierbei wird beispielsweise überprüft, ob eine Kamera an einem Dach des Fahrzeugs nahe der Rückscheibe beide Augen des Fahrers erfasst. Werden beide Augen von der Kamera erfasst, so wird von der Recheneinheit festgelegt, dass der rückwärtige Fahrbereich des Fahrzeugs in dem Gesichtsfeld des Fahrers liegt. Wird also festgestellt, dass der Fahrer in die Fahrtrichtung schaut, dass also sein Gesichtsfeld den wesentlichen Fahrbereich des Fahrzeugs überdeckt, so wird zu einem Ansteuerschritt 57 verzweigt, in dem das Fahrzeug entlang der Fahrstrecke geführt wird. Anschließend wird zu dem ersten Prüfschritt 55 zurück verzweigt, so dass eine Überprüfung nach einer jeweiligen vorgeschriebenen Fahrdistanz wieder erneut erfolgen kann, beispielsweise nach 10 cm.

Wird in dem zweiten Prüfschritt 56 dagegen festgestellt, dass der Fahrer den Fahrraum nicht überblickt, dass er beispielsweise nach vorne schaut, während das Fahrzeug rückwärts fährt und damit der Fahrweg des Fahrzeugs nicht in seinem Gesichtsfeld liegt, so wird zu einem Warn- und Pausenschritt 58 verzweigt. Sollte das Fahrzeug noch nicht in Bewegung sein, so unterbleibt ein automatisches Führen des Fahrzeugs und es wird ggf. eine Warnung an den Fahrer ausgegeben, beispielsweise durch die Ausgabe eines Warntons über den Lautsprecher 30. Ist das Fahrzeug bereits in automatischer Führung und bewegt es sich fort, so wird ebenfalls eine vorzugsweise akustische Warnung ausgegeben. In einer weiteren Ausführungsform wird das Fahrzeug zudem durch eine Reduzierung einer Antriebsleistung und/oder einer Bremsung verzögert. Anschließend wird ebenfalls zu dem ersten Prüfschritt 55 zurück verzweigt. In einer ersten Ausführungsform ist es ausreichend, dass der Fahrer für eine Fortführung des automatischen Fahrens wieder in die jeweilige Richtung des Fahrwegs des Fahrzeugs blickt. In einer weiteren Ausführungsform kann es auch vorgesehen sein, dass eine zusätzliche, manuelle Freigabe des automatischen Fahrens durch den Fahrer erforderlich ist.

## Patentansprüche

1. Vorrichtung zur Freigabe einer automatischen Führung eines Fahrzeugs, mit einer Schnittstelle (25) zu einer Überwachungseinrichtung (26) zur zumindest teilweisen Überwachung eines sich im Fahrzeug befindlichen Fahrzeugführers, mit einer Schnittstelle (23) zu einer Einrichtung (11) zum automatischen Führen des Fahrzeugs und zum Ermitteln einer Fahrtrichtung des Fahrzeugs bei einer durchzuführenden automatischen Führung und mit einer Auswerteinheit (27) zum Vergleich eines sich aus der Überwachung des Fahrers bestimmten Gesichtsfeldes des Fahrers mit der Fahrtrichtung des Fahrzeugs bei der automatischen Führung, **dadurch gekennzeichnet dass** eine automatische Führung nur dann freigegeben wird, wenn die Fahrtrichtung des Fahrzeugs bei der automatischen Führung in dem Gesichtsfeld des Fahrers liegt.

2. Vorrichtung nach Anspruch 1, **dadurch gekennzeichnet, dass** eine automatische Führung des Fahrzeugs rückwärts in eine Parklücke erfolgt.

3. Vorrichtung nach einem der vorhergehenden Ansprüche, **gekennzeichnet durch** eine Kameraeinrichtung (26, 29, 34, 37, 38, 47, 49) zur Ermittlung der Blickrichtung und/oder der Kopfposition des Fahrzeugführers zur Bestimmung des Gesichtsfeldes des Fahrers aus der ermittelten Blickrichtung und/oder der ermittelten Kopfposition des Fahrers.

4. Vorrichtung nach Anspruch 3, **dadurch gekennzeichnet, dass** die Kameraeinrichtung (26, 29, 34, 37, 38, 47, 49) an einem Fahrzeugdach (35) oder an einer Instrumententafel des Fahrzeugs angeordnet ist.

5. Verfahren zur Freigabe einer automatischen Führung eines Fahrzeugs, wobei ein Gesichtsfeld eines sich im Fahrzeug befindlichen Fahrers überwacht wird, wobei eine Fahrtrichtung des Fahrzeugs bei einer durchzuführenden automatischen Führung ermittelt und mit dem ermittelten Gesichtsfeld des Fahrers verglichen wird, **dadurch gekennzeichnet dass** eine automatische Führung nur dann freigegeben wird, wenn die Fahrtrichtung des Fahrzeugs bei der automatischen Führung in dem ermittelten Gesichtsfeld des Fahrers liegt.

6. Verfahren nach Anspruch 5, **dadurch gekennzeichnet, dass** eine Kopfposition und/oder eine Blickrichtung des Fahrers ermittelt werden und dass das Gesichtsfeld des Fahrers aus der ermittelten Kopfposition und/oder der Blickrichtung bestimmt wird.

7. Verfahren nach einem der Ansprüche 5-6, **dadurch gekennzeichnet, dass** eine Freigabe einer automatischen Führung aufgehoben wird, wenn festgestellt wird, dass die Fahrtrichtung des Fahrzeugs bei der automatischen Führung nicht mehr in dem Gesichtsfeld des Fahrers liegt.

8. Verfahren nach Anspruch 7, **dadurch gekennzeichnet, dass** bei einer Aufhebung einer Freigabe einer automatischen Führung das Fahrzeug automatisch verzögert wird.

9. Verfahren nach Anspruch 8, **dadurch gekennzeichnet, dass** mit oder vor Einleiten einer automatischen Verzögerung eine Warnung zum Hinweis auf eine anstehende oder beginnende automatische Verzögerung ausgegeben wird.

## Claims

1. Device for approving automatic guidance of a vehicle, having an interface (25) to a monitoring device (26) for at least partially monitoring a vehicle driver located in the vehicle, having an interface (23) to a device (11) for automatically guiding the vehicle and for determining a direction of travel of the vehicle if an automatic guidance is to be carried out, and having an evaluation unit (27) for comparing a driver's field of vision, determined from the monitoring of the driver, with the direction of travel of the vehicle during the automatic guidance, **characterized in that** automatic guidance is approved only when the direction of travel of the vehicle is in the driver's field of vision during the automatic guidance.

2. Device according to Claim 1, **characterized in that** the vehicle is guided automatically in reverse into a parking space.

3. Device according to one of the preceding claims, **characterized by** a camera device (26, 29, 34, 37, 38, 47, 49) for determining the viewing direction and/or the position of the vehicle driver's head in order to determine the driver's field of vision from the determined viewing direction and/or the determined position of the driver's head.

4. Device according to Claim 3, **characterized in that** the camera device (26, 29, 34, 37, 38, 47, 49) is arranged on a vehicle roof (35) or on an instrument panel of the vehicle.

5. Method of approving automatic guidance of a vehicle, wherein a field of vision of a driver located in the vehicle is monitored,
wherein a direction of travel of the vehicle is determined when an automatic guidance is to be carried out and is compared with the determined driver's field of vision, **characterized in that** automatic guidance is approved only when the direction of travel of the vehicle during the automatic guidance is in the determined driver's field of vision.

6. Method according to Claim 5, **characterized in that** a position of the head and/or a viewing direction of the driver are determined and **in that** the driver's field of vision is determined from the determined head position and/or the viewing direction.

7. Method according to one of Claims 5-6, **characterized in that** approval of automatic guidance is cancelled if it is detected that the direction of travel of the vehicle is no longer in the driver's field of vision during the automatic guidance.

8. Method according to Claim 7, **characterized in that** when approval of automatic guidance is cancelled the vehicle is automatically decelerated.

9. Method according to Claim 8, **characterized in that** when or before automatic deceleration is initiated, a warning indicating that automatic deceleration is imminent or is starting is output.

## Revendications

1. Dispositif destiné à activer un guidage automatique d'un véhicule, comprenant une interface (25) d'un équipement de surveillance (26) destiné à surveiller au moins en partie un conducteur se trouvant dans le véhicule, comportant une interface (23) d'un équipement (11) de guidage automatique du véhicule et de détection d'une direction de déplacement du véhicule lorsqu'un guidage automatique doit être effectué et comportant une unité d'analyse (27) destinée à comparer un champ de vision du conducteur déterminé à partir de la surveillance à la direction de déplacement du véhicule lors du guidage automatique, **caractérisé en ce qu'**un guidage automatique n'est activé que lorsque la direction de déplacement du véhicule se situe dans le champ de vision du conducteur lors du guidage automatique.

2. Dispositif selon la revendication 1, **caractérisé en ce qu'**un guidage automatique du véhicule est effectué en marche arrière dans une place de stationnement.

3. Dispositif selon l'une quelconque des revendications précédentes, **caractérisé par** un équipement à caméra (26, 29, 34, 37, 38, 47, 49) destiné à détecter la direction du regard et/ou la position de la tête du conducteur pour déterminer le champ de vision du conducteur à partir de la direction de regard détectée et/ou de la position de tête détectée du conducteur.

4. Dispositif selon la revendication 3, **caractérisé en ce que** l'équipement à caméra (26, 29, 34, 37, 38, 47, 49) est placé sur un toit de véhicule (35) ou sur une planche de bord du véhicule.

5. Procédé d'activation d'un guidage automatique d'un véhicule consistant à surveiller un champ de vision d'un conducteur se trouvant dans le véhicule, à détecter une direction de déplacement du véhicule lorsqu'un guidage automatique doit être effectué et à le comparer au champ de vision détecté du conducteur, **caractérisé en ce que** qu'un guidage automatique n'est activé que lorsque la direction de déplacement du véhicule se situe dans le champ de vision détecté du conducteur lors du guidage automatique.

6. Procédé selon la revendication 5, **caractérisé en ce qu'**une position de tête et/ou une direction de regard du conducteur sont détectées et **en ce que** le champ de vision du conducteur est déterminé à partir de la position de tête détectée et/ou de la direction de regard.

7. Procédé selon l'une quelconque des revendications 5 à 6, **caractérisé en ce qu'**une activation d'un guidage automatique est annulée lorsqu'il est établi que la direction de déplacement du véhicule ne se situe plus dans le champ de vision du conducteur lors du guidage automatique.

8. Procédé selon la revendication 7, **caractérisé en ce que**, lors de l'annulation d'une activation d'un guidage automatique, le véhicule est automatiquement ralenti.

9. Procédé selon la revendication 8, **caractérisé en ce qu'**une alarme est émise lors du déclenchement d'un ralentissement automatique ou avant celui-ci pour indiquer qu'un ralentissement automatique est imminent ou commence.
